**Europäisches Patentamt**

**European Patent Office**

**Office européen des brevets**

(19)

(11) Publication number: **0 168 894**
**B1**

## (12) EUROPEAN PATENT SPECIFICATION

(45) Date of publication of patent specification: **29.11.89**

(21) Application number: **85201153.5**

(22) Date of filing: **09.07.85**

(51) Int. Cl.⁴: **B 01 J 37/18**, B 01 J 23/74,
B 01 J 23/86

(54) Catalyst activation.

(30) Priority: **20.07.84 NL 8402300**

(43) Date of publication of application:
**22.01.86 Bulletin 86/04**

(45) Publication of the grant of the patent:
**29.11.89 Bulletin 89/48**

(84) Designated Contracting States:
**AT BE DE FR IT NL SE**

(56) References cited:
**EP-A-0 109 702**
**EP-A-0 110 449**
**EP-A-0 152 652**
**GB-A-2 140 701**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Post, Martin Franciscus Maria
Badhuisweg 3
NL-1031 CM Amsterdam (NL)**

(74) Representative: **Aalbers, Onno et al
P.O. Box 302
NL-2501 CH The Hague (NL)**

Courier Press, Leamington Spa, England.

**Description**

The invention relates to a process for the activation of a catalyst which is to be used for the conversion of a mixture of carbon monoxide and hydrogen into hydrocarbons.

The preparation of hydrocarbons from a $H_2/CO$ mixture by contacting this mixture at elevated temperature and pressure with a catalyst is known in the literature as the Fischer-Tropsch hydrocarbon synthesis. Catalysts often used for the purpose comprise one or more metals from the iron group, together with one or more promoters, and a carrier material. These catalysts can suitably be prepared by the known techniques, such as precipitation, impregnation, kneading and melting. The products which can be prepared by using these catalysts usually have a very wide range of molecular weight distribution and, in addition to branched and unbranched paraffins, often contain considerable amounts of olefins and oxygen-containing organic compounds. Usually only a minor portion of the products obtained is made up of middle distillates. Of these middle distillates not only the yield but also the pour point is unsatisfactory. Therefore the direct conversion of $H_2/CO$ mixtures according to Fischer-Tropsch is not a very attractive route for the production of middle distillates on a technical scale.

In this patent application "middle distillates" should be taken to be hydrocarbon mixtures whose boiling range corresponds substantially with that of the kerosine and gas oil fractions obtained in the conventional atmospheric distillation of crude mineral oil. The middle distillate range lies substantially between about 150 and 360°C.

Recently where was found a class of Fischer-Tropsch catalysts having the property of yielding a product in which only very minor amounts of olefins and oxygen-containing compounds occur and which consists virtually completely of unbranched paraffins, a considerable portion of which paraffins boils above the middle distillate range. It has been found that the high-boiling part of this product can be converted in high yield into middle distillates by hydrocracking. As feed for the hydrocracking at least the part of the product is chosen whose initial boiling point lies above the final boiling point of the heaviest middle distillate desired as end product. The hydrocracking, which is characterized by a very low hydrogen consumption, leads to middle distillates with a considerably better pour point than those obtained in the direct conversion of a $H_2/CO$ mixture according to Fischer-Tropsch.

The Fischer-tropsch catalysts belonging to the above-mentioned class contain silica, alumina or silica-alumina as carrier material and cobalt together with zirconium, titanium and/or chromium as catalytically active metals, in such quantities that the catalysts comprise 3—60 pbw of cobalt and 0.1—100 pbw of zirconium, titanium and/or chromium per 100 pbw of carrier material. The catalysts are prepared by depositing the metals involved on the carrier material by kneading and/or impregnation. For further information on the preparation of these catalysts by kneading and/or impregnation reference may be made to Netherlands patent application No. 8301922 which was recently filed in the name of the Applicant.

Preparatory of becoming eligible for use in the preparation of hydrocarbons from a $H_2/CO$ mixture the cobalt catalysts should be activated. Until recently this activation was carried out by contacting the catalyst at a temperature between 200 and 350°C and at a constant hydrogen partial pressure between 0.001 and 75 bar with hydrogen or a hydrogen-containing gas. The above-mentioned activation is attended with two drawbacks, connected with the activation time and the performance of the catalyst obtained. As for the activation time, catalysts with acceptable activity and selectivity can only be obtained if the hydrotreatment is carried out over a rather long period of time. Treatment times of about 90 hours are common practice. As for the catalyst performance, provided that the treatment time chosen is long enough, catalysts can be obtained which show acceptable activity and selectivity, but the level of these catalyst properties is certainly capable of improvement.

Further investigation into activation and performance of the afore-mentioned cobalt catalysts has now shown that the two drawbacks mentioned hereinbefore can be removed by increasing the hydrogen partial pressure gradually or step-wise from an initial value $(P_{H_2})_i$ to an ultimate value $(P_{H_2})_u$ in such a manner that the relation $(P_{H_2})_u \geqslant 5 \times (P_{H_2})_i$. In the first place this leads to a considerable reduction of the activation time needed. It has been found that after no more than about 10 hours, and sometimes even earlier, the desired activation is achieved. It has further been found that in this manner catalysts can be obtained which have both a considerably higher activity and a considerably higher selectivity than those obtained in the activation process carried out at a constant hydrogen partial pressure.

The present patent application therefore relates to a process for the activation of a catalyst, in which a catalyst comprising 3—60 pbw of cobalt and 0.1—100 pbw of at least one other metal chosen from zirconium, titanium and chromium per 100 pbw of silica, alumina or silica-alumina, which catalyst has been prepared by kneading and/or impregnation, is contacted at a temperature between 200 and 350°C and a hydrogen partial pressure between 0,001 and 75 bar with hydrogen or a hydrogen-containing gas, and in which during the activation the hydrogen partial pressure is increased gradually or step-wise from an initial value $(P_{H_2})_i$ to an ultimate value $(P_{H_2})_u$ in such a manner as to satisfy the relation $(P_{H_2})_u \geqslant 5 \times (P_{H_2})_i$.

The activation according to the invention is preferably carried out at a temperature below 325°C, a hydrogen partial pressure below 50 bar and a space velocity of 50—100000 $N1.1^{-1} \cdot h^{-1}$. Particular preference is given to a space velocity of 500—10000 $N1.1^{-1} \cdot h^{-1}$.

$(P_{H_2})_i$ is preferably chosen between 0.01 and 10 bar. Further, it is preferred to choose $(P_{H_2})_i$ such as to satisfy the relation:

2

$$\frac{D}{10^4 \times (P_{H_2})_i^2 \times (P_{Tot})_i} > \frac{10 \times S_i}{L \times (Z+1)}$$

wherein

$D$=the space velocity in $N1.1^{-1} \cdot h^{-1}$,
$(P_{H_2})_i$=the initial hydrogen partial pressure in bar,
$(P_{Tot})_i$=the initial overall pressure in bar,
$S_i$=the internal surface area of the catalyst in $m^2/ml$,
$L$=the cobalt load of the catalyst in mg Co/ml, and
$Z$=the Zr, Ti or Cr load of the catalyst is mg metal/100 mg carrier.

The $(P_{H_2})_u$ used in the activation preferably lies between 0.1 and 20 bar. Further, it is preferred to carry out the activation in such a way as to satisfy the relation $(P_{H_2})_u \geq 10 \times (P_{H_2})_i$.

The process according to the invention is preferably applied to cobalt catalysts which form the subject matter of Netherlands patent application No. 8301922. These are catalysts which satisfy the relation

$$(3+4R) > \frac{L}{S_i} > (0.3+0.4R)$$

wherein

$L$=the total quantity of cobalt present on the catalyst, expressed as mg Co/ml,
$S_i$=the internal surface area of the catalyst, expressed as $m^2/ml$, and
$R$=the weight ratio between the quantity of cobalt which has been deposited on the catalyst by kneading and the total quantity of cobalt present on the catalyst.

Further, the process according to the invention is preferably applied to cobalt catalysts which have been prepared by any one of the three procedures following:

a) first cobalt is deposited in one or more steps by impregnation, next the other metal is deposited in one or more steps, likewise by impregnation,

b) first the other metal is deposited in one or more steps by impregnation, next cobalt is deposited in one or more steps, likewise by impregnation, and

c) first cobalt is deposited in one or more steps by kneading and next the other metal is deposited in one or more steps, by impregnation.

Further, the process according to the invention is preferably applied to cobalt catalysts containing 15—50 pbw of cobalt per 100 pbw of carrier. The quantity of the other metal which is preferably present in the cobalt catalysts is dependent on the way in which this metal was deposited. In the case of catalysts in which the cobalt has been deposited on the carrier first and the other metal next preference is given to catalysts comprising 0.1—5 pbw of the other metal per 100 pbw of carrier. In the case of catalysts in which the other metal has been deposited on the carrier first and cobalt next, preference is given to catalysts comprising 5—40 pbw of the other metal per 100 pbw of carrier. The other metal used by preference is zirconium and the carrier material used by preference is silica.

The catalysts which have been activated according to the process of the invention are excellently suitable for use in the preparation of hydrocarbons from a mixture of carbon monoxide and hydrogen. The present patent application therefore also relates to a process for the preparation of hydrocarbons from a $H_2/CO$ mixture by using a catalyst which has been activated according to the invention. The conversion of the $H_2/CO$ mixture into hydrocarbons is preferably carrier out at a temperature of 125—350°C and in particular of 175—275°C and a pressure of 5—100 bar and in particular of 10—75 bar. The conversion of the $H_2/CO$ mixture is preferably carried out by using the catalyst in the form of a fixed bed, which catalyst bed has such an external surface area ($S_e$) between 5 and 70 $cm^2/ml$ and such an internal surface area ($S_i$) between 10 and 400 $m^2/ml$ as to satisfy the relation $10^6 > S_e^2 \times S_i > 2.5 \times 10^4$.

$H_2/CO$ mixtures which are eligible to be converted into hydrocarbons by using a catalyst which has been activated according to the invention can very suitably by obtained starting from light hydrocarbons, such as methane, by steam reforming or partial oxidation. Special preference is given to natural gas as feed for the preparation of the $H_2/CO$ mixture.

The $H_2/CO$ mixture which is converted into hydrocarbons by using a catalyst which has been activated according to the invention preferably has a $H_2/CO$ molar ratio higher than 1.5. If the feed has a $H_2/CO$ molar ratio lower than 1.5, the latter is preferably increased to a value between 1.5 and 2.5 and in particular to a value between 1.75 and 2.25, before the feed is contacted with the cobalt catalyst. The $H_2/CO$ molar ratios of hydrogen-poor $H_2/CO$ mixtures can be increased by, for instance, addition of hydrogen, removal of carbon monoxide, mixing into a hydrogen-rich $H_2/CO$ mixture, or by subjecting the hydrogen-poor $H_2/CO$ mixture to the CO-shift reaction.

As remarked hereinbefore, the present cobalt catalysts when used for the conversion of a $H_2/CO$ mixture yield a substantially waxy product the high-boiling part of which can be converted in high yield into middle distillates by subjecting it to a hydrocracking treatment. As feed for the hydrocracking at least the part of the product is chosen whose initial boiling point lies above the final boiling point of the heaviest middle distillate desired as end product.

Although in the preparation of middle distillates from the product obtained over the cobalt catalyst the part of the product whose initial boiling point lies above the final boiling point of the heaviest middle distillate desired as end product will do as feed, it is preferred to use for this purpose the total $C_5^+$ fraction of the product prepared over the cobalt catalyst, since it has been found that the catalytic hydrotreatment leads to enhanced quality of the gasoline, kerosine and gas oil fractions present therein.

The hydrocracking treatment is carried out by contacting the fraction to be treated at elevated temperature and pressure and in the presence of hydrogen with a catalyst comprising one or more noble metals from Group VIII supported on the carrier. The hydrocracking catalyst used by preference is a catalyst which comprises 0.1—2%w, and in particular 0.2—1%w of one or more noble metals from Group VIII on a carrier. Catalysts containing platinum or palladium as the noble metal from Group VIII and silica-alumina as the carrier are preferred. The hydrocracking is preferably carried out at a temperature of 200—400°C and in particular of 250—350°C, and a pressure of 5—100 bar and in particular of 10—75 bar.

The invention is now illustrated with the aid of the following example.

Example

Catalyst preparation

Two $Co/Zr/SiO_2$ catalysts (Catalysts 1 and 2) were prepared by impregnation of two globular silica carriers (silicas A and B) with solutions of cobalt and zirconium compounds. In each impregnation step use was made of a quantity of solution the volume of which corresponded substantially with the pore volume of the carrier concerned. After each impregnation step the solvent was removed by heating and the material was calcined at 500°C. Catalysts 1 and 2 were prepared as follows.

Catalyst 1

Single-step impregnation of silica carrier A with a solution of cobalt nitrate in water, followed by single-step impregnation of the cobalt-loaded carrier with a solution of zirconium nitrate in water.

Catalyst 2

Two-step impregnation of silica carrier B with a solution of zirconium tetra n-propoxide in a mixture of propanol, toluene and acetyl acetone, followed by single-step impregnation of the zirconium-loaded carrier with a solution of cobalt nitrate in water.

Further information on Catalysts 1 and 2 is given in Table I.

Catalyst activation

Six activation experiments (Experiments 1—6) were carried out, in which Catalysts 1 and 2, being the starting material, were treated with a mixture of hydrogen and nitrogen at a space velocity (D) of 1200 $N1.1^{-1} \cdot h^{-1}$ and a total pressure ($P_{Tot}$) of 2 bar to prepare the activated catalysts 1A—1C and 2A—2C, respectively. The other conditions under which the activation experiments were carried out are given in Table II. The preparation of Catalysts 1A, 1B, 2A and 2B was carried out at a constant hydrogen partial pressure. In the preparation of Catalyst 1C the hydrogen partial pressure was increased step-wise from 0.02 to 2 bar during the activation. In the preparation of 2C the hydrogen partial pressure was increased step-wise from 0.08 to 2 bar during the activation.

Catalyst testing

The activated Catalysts 1A up to and including 2C were used in six experiments (Experiments I—VI) in the preparation of hydrocarbons from a mixture of carbon monoxide having a $H_2/CO$ molar ratio of 2. The experiments were carried out at a space velocity of 600 $N1.1^{-1} \cdot h^{-1}$ and a pressure of 20 bar in a reactor containing a fixed catalyst bed. The temperatures at which the experiments were carried out as well as the results of these experiments are listed in Table III.

Of the activation experiments mentioned in Table II only Experiments 3 and 6 are experiments according to the invention. In these experiments, in which during the activation the hydrogen partial pressure was increased step-wise, and in which the relation $(P_{H_2})_u \geqslant 5 \times (P_{H_2})_i$ was satisfied, a short activation period led to catalysts of high activity and selectivity as shown by the results mentioned in Table III. Experiments 1, 2, 4 and 5 fall outside the scope of the invention. They have been included in the patent application for comparison. In these experiments, which were carried out at a constant hydrogen partial pressure, both short and long activation periods led to catalysts of lower activity and selectivity, as shown by the results mentioned in Table III. Experiments 1 and 4 in addition yielded catalysts of low stability.

4

TABLE I

| Catalyst No. | 1 | 2 |
|---|---|---|
| Co load (L), mg Co/ml catalyst | 97 | 94 |
| Zr load (Z), mg Zr/100 mg $SiO_2$ | 0.9 | 12 |
| Internal surface area ($S_i$), $m^2$/ml | 100 | 97 |
| External surface area ($S_e$), $cm^2$/ml | 26 | 24 |
| $\dfrac{10 \times S_i}{L \times (Z+1)}$ | 5.4 | 0.69 |
| $S_e^2 \times S_i$ | 67600 | 55872 |

TABLE II

| Experiment No. | 1 | 2 | 3 | 4 | 5 | 6 |
|---|---|---|---|---|---|---|
| Catalyst to be activated, No. | 1 | 1 | 1 | 2 | 2 | 2 |
| Initial hydrogen partial pressure, $(P_{H_2})_i$, bar | 0.02 | 0.02 | 0.02 | 0.08 | 0.08 | 0.08 |
| Ultimate hydrogen partial pressure, $(P_{H_2})_u$, bar | 0.02 | 0.02 | 2 | 0.08 | 0.08 | 2 |
| Temperature, °C | 250 | 250 | 250 | 260 | 260 | 260 |
| $\dfrac{D}{10^4 \times (P_{H_2})_i^2 (P_{Tot})_i}$ | 150 | 150 | 150 | 9.4 | 9.4 | 9.4 |
| Activation period, h | 11 | 92 | 11 | 4.5 | 90 | 4.5 |
| Activated catalyst, No. | 1A | 1B | 1C | 2A | 2B | 2C |

TABLE III

| Experiment No. | I | II | III | IV | V | VI |
|---|---|---|---|---|---|---|
| Catalyst No. | 1A | 1B | 1C | 2A | 2B | 2C |
| Temperature, °C | 210 | 210 | 210 | 205 | 205 | 205 |
| Initial ($H_2$+CO) conversion, %v | 13 | 73 | 78 | 21 | 65 | 74 |
| $C_3^+$ selectivity, %w | 54 | 84 | 87 | 74 | 85 | 87 |
| $C_5^+$ selectivity, %w | 38 | 78,5 | 82 | 61 | 80 | 82 |
| Loss of ($H_2$+CO) conversion, %v per 100 h | >5 | 2 | 2 | >5 | 1 | 1 |

**Claims**

1. A process for the activation of a catalyst, characterized in that a catalyst which comprises 3—60 pbw of cobalt and 0.1—100 pbw of at least one other metal chosen from zirconium, titanium and chromium per 100 pbw of silica, alumina or silica-alumina, and which has been prepared by kneading and/or impregnation is contacted at a temperature between 200 and 350°C and a hydrogen partial pressure between 0.001 and 75 bar with hydrogen or a hydrogen-containing gas, and that during the activation the hydrogen partial pressure is increased gradually or step-wise from an initial value $(P_{H_2})_i$ to an ultimate value $(P_{H_2})_u$ in such a manner as to satisfy the relation $(P_{H_2})_u \geqslant 5 \times (P_{H_2})_i$.

2. A process as claimed in claim 1, characterized in that it is carried out at a temperature below 325°C, a hydrogen partial pressure below 50 bar and a space velocity of 50—100000 $N1.1^{-1} \cdot h^{-1}$.

3. A process as claimed in claim 2, characterized in that it is carried out at a space velocity of 500—10000 $N1.1^{-1} \cdot h^{-1}$.

4. A process as claimed in any one of claims 1—3, characterized in that it is carried out by using a $(P_{H_2})_i$ between 0.01 and 10 bar.

5. A process as claimed in any one of claims 1—4, characterized in that it is carried out by using such a $(P_{H_2})_i$ as to satisfy the relation

$$\frac{D}{10^4 \times (P_{H_2})_i^2 \times (P_{Tot})_i} > \frac{10 \times S_i}{L \times (Z+1)}$$

wherein
$D$=the space velocity in $N1.1^{-1} \cdot h^{-1}$,
$(P_{H_2})_i$=the initial hydrogen partial pressure in bar,
$(P_{Tot})_i$=the initial overall pressure in bar,
$S_i$=the internal surface area of the catalyst in $m^2/ml$,
$L$=the cobalt load of the catalyst in mg Co/ml, and
$Z$=the Zr, Ti or Cr load of the catalyst is mg metal/100 mg carrier.

6. A process as claimed in any one of claims 1—5, characterized in that it is carried out by using a $(P_{H_2})_u$ between 0.1 and 20 bar.

7. A process as claimed in any one of claims 1—6, characterized in that it is carried out in such a manner as to satisfy the relation $(P_{H_2})_u \geqslant 10 \times (P_{H_2})_i$.

8. A process as claimed in any one of claims 1—7, characterized in that the catalyst satisfies the relation

$$(3+4R) > \frac{L}{S_i} > (0.3+0.4R)$$

wherein
$L$=the total quantity of cobalt present on the catalyst, expressed as mg Co/ml,
$S_i$=the internal surface area of the catalyst, expressed as $m^2/ml$, and
$R$=the weight ratio between the quantity of cobalt which has been deposited on the catalyst by kneading and the total quantity of cobalt present on the catalyst.

9. A process as claimed in any one of claims 1—8, characterized in that, per 100 pbw of carrier, the catalyst comprises 15—50 pbw of cobalt and either 0.1—5 pbw of the other metal if during the preparation cobalt was deposited first and the other metal next, or 5—40 pbw of the other metal if during the preparation the other metal was deposited first and cobalt next.

10. A process as claimed in any one of claims 1—9, characterized in that the catalyst comprises zirconium as the other metal and silica as carrier.

**Patentansprüche**

1. Verfahren zur Aktivierung eines Katalysators, dadurch gekennzeichnet, daß ein Katalysator, der 3—60 Gew.-Teile Kobalt und 0,1—100 Gew.-Teile wenigstens eines anderen Metalles, ausgewählt unter Zirkon, Titan und Chrom, je 100 Gew.-Teile Siliciumdioxid, Aluminiumoxid oder Siliciumdioxid - Aluminiumoxid enthält, welcher Katalysator durch Kneten und/oder Imprägnieren hergestellt worden ist, bei einer Temperatur zwischen 200 und 350°C und einem Wasserstoffpartialdruck zwischen 0,001 und 75 bar mit Wasserstoff oder einem Wasserstoff - enthaltenden Gas in Berührung gebracht wird, und daß während der Aktivierung der Wasserstoffpartialdruck stetig oder stufenweise von einem Anfangswert $(P_{H_2})_i$ zu einem Endwert $(P_{H_2})_u$ derart erhöht wird, daß die Beziehung $(P_{H_2})_u \geqslant 5 \times (P_{H_2})_i$ erfüllt wird.

2. Verfahren nach Anspruch 1, dadurch gekennzeichnet, daß es bei einer Temperatur unter 325°C, bei einem Wasserstoffpartialdruck unter 50 bar und bei einer Raumgeschwindigkeit von 50—100.000 $N1.1^{-1} \cdot h^{-1}$ ausgeführt wird.

3. Verfahren nach Anspruch 2, dadurch gekennzeichnet, daß es bei einer Raumgeschwindigkeit von 500—10.000 $N1.1^{-1} \cdot h^{-1}$ ausgeführt wird.

4. Verfahren nach einem der Ansprüche 1 bis 3, dadurch gekennzeichnet, daß es unter Anwendung eines Anfangspartialdruckes $(P_{H_2})_i$ zwischen 0,01 und 10 bar ausgeführt wird.

5. Verfahren nach einem der Ansprüche 1 bis 4, dadurch gekennzeichnet, daß es unter Anwendung eines solchen Anfangspartialdruckes $(P_{H_2})_i$ ausgeführt wird, daß die Beziehung:

$$\frac{D}{10^4 \times (P_{H_2})_i^2 \times (P_{Tot})_i} > \frac{10 \times S_i}{L \times (Z+1)}$$

6

erfüllt wird, worin

D=Raumgeschwindigkeit in $N1.1^{-1} \cdot h^{-1}$,

$(P_{H_2})_i$=Anfangs-Wasserstoffpartialdruck in bar,

$(P_{Tot})_i$=Anfangs-Gesamtdruck in bar,

$S_i$=innere Oberfläche des Katalysators in $m^2/ml$,

L=Kobaltbeladung des Katalysators in mg Co/ml, und

Z=Zr-, Ti- oder Cr-Beladung des Katalysators in mg Metall/100 mg Träger.

6. Verfahren nach einem der Ansprüche 1 bis 5, dadurch gekennzeichnet, daß es unter Anwendung eines Endpartialdruckes $(P_{H_2})_u$ zwischen 0,1 und 20 bar ausgeführt wird.

7. Verfahren nach einem der Ansprüche 1 bis 6, dadurch gekennzeichnet, daß es in solcher Weise ausgeführt wird, daß die Beziehung $(P_{H_2})_u \geq 10 \times (P_{H_2})_i$ erfüllt wird.

8. Verfahren nach einem der Ansprüche 1 bis 7, dadurch gekennzeichnet, daß der Katalysator der Beziehung

$$(3+4R) > \frac{L}{S_i} > (0,3+0,4R)$$

entspricht, worin

L=Gesamtmenge an auf dem Katalysator vorliegendem Kobalt, ausgedrückt als mg Co/ml Katalysator,

$S_i$=innere Oberfläche des Katalysators, ausgedrückt als $m^2/ml$ des Katalysators, und

R=Gewichtsverhältnis der auf dem Katalysator durch Kneten abgelagerten Kobaltmenge zu der auf dem Katalysator vorliegenden Gesamtmenge an Kobalt.

9. Verfahren nach einem der Ansprüche 1 bis 8, dadurch gekennzeichnet, daß der Katalysator je 100 Gew.-Teile Träger 15—50 Gew.-Teile Kobalt und entweder 0,1—5 Gew.-Teile des anderen Metalles enthält, wenn während der Herstellung das Kobalt zuerst und das andere Metall anschließend abgelagert worden sind, oder 5—40 Gew.-Teile des anderen Metalles enthält, wenn während der Herstellung das andere Metall zuerst und das Kobalt anschließend abgelagert worden sind.

10. Verfahren nach einem der Ansprüche 1 bis 9, dadurch gekennzeichnet, daß der Katalysator Zirkon als das andere Metall und Siliciumdioxid als Trägermaterial enthält.

## Revendications

1. Procédé d'activation d'un catalyseur, caractérisé en ce qu'on met en contact un catalyseur qui comprend 3—60 parties en poids (pp) de cobalt et 0,01—100 pp d'au moins un autre métal choisi parmi le zirconium, le titane et le chrome pour 100 pp de silice, d'alumine ou de silice-alumine, et qui a été préparé par pétrissage et/ou imprégnation, à une température comprise entre 200 et 350°C et une pression partielle d'hydrogène comprise entre 0,01 et 75 bars avec de l'hydrogène ou un gaz contenant de l'hydrogène, et en ce que pendant l'activation, la pression partielle d'hydrogène est accrue graduellement ou par étapes à partir d'une valeur initiale $(P_{H_2})_i$ jusqu'à une valeur finale $(P_{H_2})_u$ de manière à satisfaire la relation $(P_{H_2})_u \geq 5 \times (P_{H_2})_i$.

2. Procédé selon la revendication 1, caractérisé en ce qu'il est conduit à une température inférieure à 325°C, une pression partielle d'hydrogène inférieure à 50 bars et une vitesse spatiale de 50—100000 $N1.1^{-1} \cdot h^{-1}$.

3. Procédé selon la revendication 2, caractérisé en ce qu'il est conduit à une vitesse spatiale de 50—10000 $N1.1^{-1} \cdot h^{-1}$.

4. Procédé selon l'une quelconque des revendications 1—3, caractérisé en ce qu'il est conduit en utilisant une $(P_{H_2})_i$ comprise entre 0,01 et 10 bars.

5. Procédé selon l'une quelconque des revendications 1—4, caractérisé en ce qu'il est conduit en utilisant une $(P_{H_2})_i$ permettant de satisfaire à la relation

$$\frac{D}{10^4 \times (P_{H_2})_i^2 \times (P_{Tot})_i} > \frac{10 \times S_i}{L \times (Z+1)}$$

où

D=vitesse spatiale en $N1.1^{-1} \cdot h^{-1}$,

$(P_{H_2})_i$=pression partielle d'hydrogène initial en bars,

$(P_{Tot})_i$=pression totale initiale en bars

$S_i$=surface interne du catalyseur en $m^2/ml$

L=charge de cobalt du catalyseur en mg de Co/ml et

Z=charge de Zr, Ti ou Cr du catalyseur en mg de métal/100 mg de support.

6. Procédé selon l'une quelconque des revendications 1—5, caractérisé en ce qu'il est conduit en utilisant une $(P_{H_2})_u$ comprise entre 0,1 et 20 bars.

7. Procédé selon l'une quelconque des revendications 1—6, caractérisé en ce qu'il est conduit de manière à satisfaire la relation $(P_{H_2})_u \geq 10 \times (P_{H_2})_i$.

8. Procédé selon l'une des revendications 1—7, caractérisé en ce que le catalyseur satisfait la relation

$$(3+4R) > \frac{L}{S_i} > (0,3+0,4R)$$

où

L=quantité totale de cobalt présent sur le catalyseur, exprimée en mg de Co/ml,

$S_i$=surface interne du catalyseur, exprimée en m²/ml et

R=rapport pondéral entre la quantité de cobalt qui a été déposée sur le catalyseur par pétrissage et la quantité totale de cobalt présente sur le catalyseur.

9. Procédé selon l'une quelconque des revendications 1—8, caractérisé en ce que, pour 100 pp de support, le catalyseur comprend 15—50 pp de cobalt et soit 0,1—5 pp de l'autre métal si, pendant la préparation le cobalt a été déposé tout d'abord et l'autre métal ensuite, soit 5—40 pp de l'autre métal si, pendant la préparation, l'autre métal a été déposé en premier et le cobalt ensuite.

10. Procédé selon l'une quelconque des revendications 1—9, caractérisé en ce que le catalyseur comprend du zirconium comme autre métal et de la silice comme support.